# EUROPEAN PATENT SPECIFICATION

(11) **EP 4 338 979 B1**
(45) Date of publication and mention of the grant of the patent: **25.03.2026**
(21) Application number: 22807279.9
(22) Date of filing: 31.03.2022
(51) Int. Cl.: B60C 1/00, C08L 7/00, B60C 11/00, B60C 11/03

(54) **PNEUMATIC TIRE**
LUFTREIFEN
PNEU

(30) Priority: 14.05.2021 JP 2021082339
(43) Date of publication of application: 20.03.2024
(73) Proprietor: The Yokohama Rubber Co., Ltd., Hiratsuka-shi, Kanagawa 254-8601 (JP)
(72) Inventor: KAZARIYA Ayaki, Hiratsuka-shi, Kanagawa 254-8601 (JP); OIZUMI, NAOYA, Hiratsuka-shi, Kanagawa 254-8601 (JP)
(74) Representative: Dilg, Haeusler, Schindelmann Patentanwaltsgesellschaft mbH
(86) International application number: PCT/JP2022/016761
(87) International publication number: WO 2022/239575

(56) References cited:
- JP-A- 2009 173 797
- JP-A- 2009 173 797
- JP-A- 2014 162 439
- JP-A- 2014 162 439
- JP-A- 2020 117 664
- JP-A- 2020 117 664
- JP-A- 2020 193 291
- JP-A- 2020 193 291
- JP-A- 2021 031 578
- JP-A- 2021 031 578
- JP-A- S5 751 504
- JP-A- S5 751 504
- US-A- 5 843 249
- US-A- 5 843 249

## Description

### Technical Field

The present invention relates to a pneumatic tire mainly intended for use as an all-season tire.

### Background Art

So-called all-season tires, which are intended to be used under various weather conditions throughout the year, are demanded to exhibit excellent running performance not only on normal dry road surfaces but also on wet road surfaces in rainy weather and snowy road surfaces in winter (see, for example, Patent Document 1). Tires for off-roading, which are intended to travel on bad roads, are demanded to have excellent off-road performance and durability capable of traveling on unpaved grassland, gravel, sandy ground, muddy ground, rocky ground surfaces, and snowy road surfaces (see, for example, Patent Document 2). Thus, all-season tires for off-roading are demanded to have various performances described above. For example, durability performance on bad roads (hereinafter, referred to as off-road durability performance), braking performance on wet road surfaces (hereinafter, referred to as wet performance), and braking performance on snowy road surfaces (hereinafter, referred to as snow performance) are demanded to be provided in a highly compatible manner. In addition to this, improvement of fuel economy performance (reducing rolling resistance) during travel is also demanded to reduce an environmental impact.

However, even when improvement of these performances is attempted by rubber (tread rubber) constituting a tread portion of a pneumatic tire, these performances contradict each other, making these performances difficult to be provided in a compatible manner to a high degree. For example, a known method of obtaining rubber having excellent wet performance includes increasing tan δ at 0°C; however, when the tan δ at 0°C increases, tan δ at 60°C also increases, and the rolling resistance cannot be reduced. Furthermore, increasing of the tan δ at 0°C increases a glass transition temperature Tg, and degradation of the snow performance is also concerned. Alternatively, a known method of obtaining rubber having excellent snow performance includes increasing a blended amount of butadiene rubber; however, the increase in the blended amount of the butadiene rubber degrades dispersibility of silica, and thus the reduction of rolling resistance may be difficult. Furthermore, as a result of the degradation of dispersibility of silica, elongation and strength of the rubber composition may decrease to degrade off-road durability performance. Thus, measures to reduce rolling resistance while improving off-road durability performance, wet performance, and snow performance in a well-balanced manner by adjusting blends or physical properties of a tread rubber and to provide these performances in a compatible manner to a high degree have been demanded.

### Citation List

### Patent Literature

Patent Document 1: JP 2015-229701 A
Patent Document 2: JP 2018-188036 A

### Summary of Invention

### Technical Problem

An object of the present invention is to provide a pneumatic tire that can provide reduced rolling resistance and improved off-road durability performance, wet performance, and snow performance and provide these performances in a compatible manner to a high degree.

### Solution to Problem

The pneumatic tire according to an embodiment of the present invention to achieve the object described above includes:
a tread portion extending in a tire circumferential direction and having an annular shape;
a pair of sidewall portions respectively disposed on both sides of the tread portion;
a pair of bead portions each disposed on an inner side of the pair of sidewall portions in a tire radial direction;
a carcass layer mounted between the pair of bead portions; and
a plurality of reinforcing layers disposed on an outer circumferential side of the carcass layer in the tread portion.

The tread portion is made of two layers, an undertread layer disposed on an outer circumferential side of the reinforcing layer and a cap tread layer disposed on an outer circumferential side of the undertread layer and constituting a road contact surface of the tread portion.

In the pneumatic tire, the cap tread layer is made of a rubber composition in which 50 parts by mass to 100 parts by mass of silica and 5 parts by mass to 25 parts by mass of carbon black are blended per 100 parts by mass of diene rubber containing 50 mass% or more of natural rubber and 20 mass% or more and 40 mass% or less of styrene-butadiene rubber,
the styrene-butadiene rubber is terminal-modified styrene-butadiene rubber having a vinyl content of 35 mass% to 70 mass%, the carbon black has a nitrogen adsorption specific surface area N₂SA of less than 130 m²/g, and
the rubber composition constituting the cap tread layer has a tensile product TB × EB calculated as a product of strength at break TB [unit: MPa] and elongation at break EB [unit: %] of 12000 or more and has a hardness of 60 or more and 70 or less.

### Advantageous Effects of Invention

In the pneumatic tire according to an embodiment of the present invention, a tread portion is made of two layers, a cap tread layer and an undertread layer, the cap tread layer is made of a rubber composition having the blend described above, and the rubber physical properties are set as described above. This can reduce rolling resistance while improving off-road durability performance, wet performance, and snow performance. In an embodiment of the present invention, "strength at break TB" and "elongation at break EB" of the rubber composition are stress at break (strength at break; unit: MPa) and elongation ratio at break (elongation at break; unit: %) determined in accordance with JIS K6251 by punching out a JIS No. 3 dumbbell test piece (thickness: 2 mm) and measuring under the conditions of a temperature of 20°C and a tensile speed of 500 mm/minute. Furthermore, "hardness" of the rubber composition was a value measured at a temperature of 23°C by using a type A durometer in accordance with JIS K 6253.

In an embodiment of the present invention, the styrene-butadiene rubber preferably has the vinyl content ranging from 55 mass% to 70 mass% and a styrene content ranging from 20 mass% to 30 mass%. The diene rubber preferably contains 5 mass% or more and 20 mass% or less of butadiene rubber besides the natural rubber and the styrene-butadiene rubber. Such a blend advantageously reduces rolling resistance while improving off-road durability performance, wet performance, and snow performance.

In an embodiment of the present invention, preferably,
on an outer surface of the tread portion, four main grooves extending along the tire circumferential direction and a plurality of land portions defined by the main grooves are formed,
the four main grooves include two center main grooves disposed on both sides of a tire equator, and two shoulder main grooves disposed on an outer side in a tire width direction of each of the two center main grooves,
each of the main grooves has a circumferential extending portion extending in the tire circumferential direction and is formed in a step shape at different positions in two tire width directions,
in between the center main groove and the shoulder main groove that are adjacent, a second lug groove extending in the tire width direction and having both ends opening to the center main groove and the shoulder main groove is disposed,
in an outer side in the tire width direction of the shoulder main groove, a shoulder lug groove extending in the tire width direction across the ground contact edge E and having one end opening to the shoulder main groove is disposed,
the second lug groove and the shoulder lug groove have inclination directions in the tire circumferential direction with respect to the tire width direction opposite to each other,
of a plurality of the second lug grooves disposed side by side in the tire circumferential direction, two types of the second lug grooves having different inclination angles with respect to the tire width direction are alternately disposed,
the second lug grooves opening to the center main groove and the shoulder main groove open to the circumferential extending portion located closer to the second lug groove of the circumferential extending portions each included in the center main groove and the shoulder main groove formed in the step shape, and
the shoulder lug groove opening to the shoulder main groove opens to the circumferential extending portion located closer to the shoulder lug groove of the circumferential extending portions included in the shoulder main groove formed in the step shape. In constituting the tread portion with the rubber composition described above, employing the tread pattern described above advantageously reduces rolling resistance while improving off-road durability performance, wet performance, and snow performance.

The "ground contact edge" refers to an end portion of a ground contact region in a tire width direction. The ground contact region is formed when a regular load is applied to the tire mounted on a regular rim, inflated to a regular internal pressure, and placed vertically on a flat surface. "Regular rim" refers to a rim defined by a standard for each tire according to a system of standards that includes standards with which tires comply, and is "standard rim" defined by Japan Automobile Tyre Manufacturers Association (JATMA), "Design Rim" defined by The Tire and Rim Association, Inc. (TRA), or "Measuring Rim" defined by European Tire and Rim Technical Organization (ETRTO), for example. In the system of standards, including standards with which tires comply, "regular internal pressure" is air pressure defined by each of the standards for each tire and refers to "maximum air pressure" in the case of JATMA, the maximum value being listed in the table "TIRE LOAD LIMITS AT VARIOUS COLD INFLATION PRESSURES" in the case of TRA, or "INFLATION PRESSURE" in the case of ETRTO. However, "regular internal pressure" is 180 kPa in a case where a tire is for a passenger vehicle. "Regular load" is a load defined by a standard for each tire according to a system of standards that includes standards with which tires comply, and refers to a "maximum load capacity" in the case of JATMA, the maximum value being listed in the table of "TIRE LOAD LIMITS AT VARIOUS COLD INFLATION PRESSURES" in the case of TRA, or "LOAD CAPACITY" in the case of ETRTO. "Regular load" corresponds to 88% of the loads described above in a case where a tire is for a passenger vehicle.

### Brief Description of Drawings

FIG. 1 is a meridian cross-sectional view illustrating an example of a pneumatic tire of an embodiment of the present invention.
FIG. 2 is a front view illustrating an example of a tread pattern of a pneumatic tire according to an embodiment of the present invention.
FIG. 3 is an explanatory diagram illustrating an enlargement of a main groove illustrated in FIG. 2.

### Description of Embodiments

Configurations of embodiments of the present invention will be described in detail below with reference to the accompanying drawings.

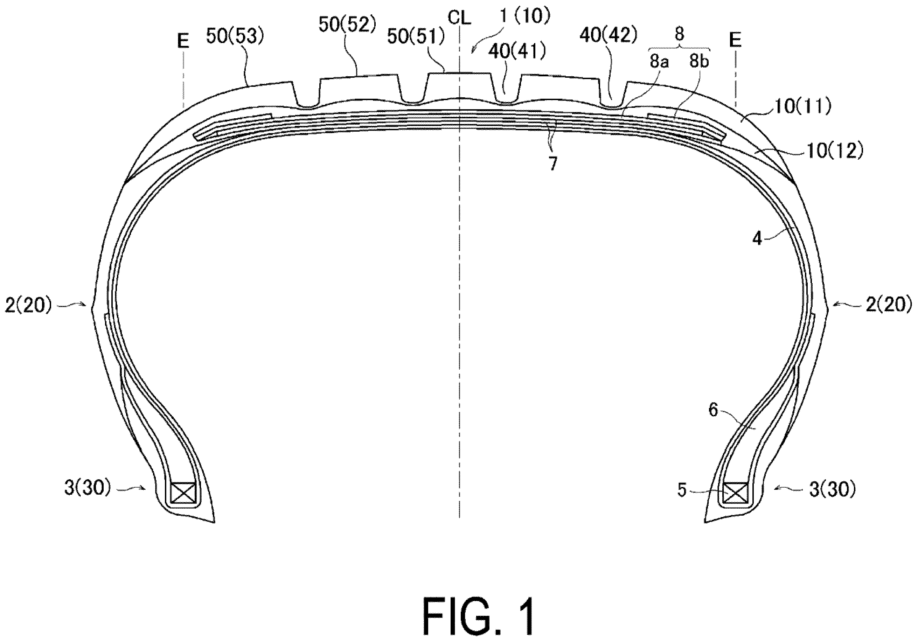

As illustrated in FIG. 1, a pneumatic tire according to an embodiment of the present invention includes a tread portion 1, a pair of sidewall portions 2 respectively disposed on both sides of the tread portion 1, and a pair of bead portions 3 respectively disposed on an inner side in a tire radial direction of the sidewall portions 2. In FIG. 1, a reference sign CL denotes a tire equator, and a reference sign E denotes a ground contact edge. Although not illustrated in FIG. 1 that is a meridian cross-sectional view, the tread portion 1, the sidewall portions 2, and the bead portions 3 each extend in the tire circumferential direction and have an annular shape, forming a basic structure of a toroidal shape of the pneumatic tire. Although the description using FIG. 1 is basically based on the illustrated meridian cross-sectional shape, all of the tire components extend in the tire circumferential direction and form the annular shape.

A carcass layer 4 is mounted between the left-right pair of bead portions 3. The carcass layer 4 includes a plurality of reinforcing cords (carcass cords) extending in the tire radial direction and covered with a coating rubber and is folded back around a bead core 5 disposed in each of the bead portions 3 from an inner side to an outer side in a tire width direction. A bead filler 6 is disposed on an outer periphery of the bead core 5, and the bead filler 6 is enveloped by a body portion and a folded back portion of the carcass layer 4.

In an example of FIG. 1, a plurality of belt layers 7 (two layers) are provided on an outer circumferential side of the carcass layer 4 in the tread portion 1. Each of the belt layers 7 includes a plurality of reinforcing cords (belt cords) inclining with respect to the tire circumferential direction, with the belt cords of the layers intersecting each other. In the belt layers 7, an inclination angle of the belt cord with respect to the tire circumferential direction is set within a range, for example, from 10° to 40°. As the belt cord, for example, a steel cord can be used.

In an example of FIG. 1, a plurality of belt cover layers 8 (two layers) is provided on an outer circumferential side of the belt layer 7. Of the two belt cover layers 8 of an illustrated example, one is a full cover layer 8a that covers the entire region of the belt layer 7, and the other is a pair of edge cover layers 8b that locally cover both end portions of the belt layers 7. The belt cover layer 8 includes a reinforcing cord (belt cover cord) oriented in the tire circumferential direction. In the belt reinforcing layer 8, an angle of the belt cover cord with respect to the tire circumferential direction is set to, for example, from 0° to 5°. As the belt cover cord, for example, an organic fiber cord can be used.

In an embodiment of the present invention, these belt layers 7 and the belt cover layers 8 may hereinafter collectively be referred to as a reinforcing layer. In an embodiment of the present invention, as the reinforcing layer, only the belt layers 7 may be provided, or both of the belt layers 7 and the belt cover layers 8 may be provided. The "outer circumferential side of the reinforcing layer" in the description below means an outer circumferential side of a belt layer 7 (especially, an outermost layer of the plurality of belt layers 7 in the tire radial direction) in a case where only the belt layers 7 are provided, or means an outer circumferential side of a belt cover layer 8 (especially, an outermost layer of the plurality of belt cover layers 8 in the tire radial direction) in a case where the belt layers 7 and the belt cover layers 8 are provided.

In the tread portion 1, a tread rubber layer 10 is disposed on the outer circumferential side of the above-mentioned carcass layer 4 and reinforcing layer (the belt layers 7 and the belt cover layers 8). In an embodiment of the present invention, the tread rubber layer 10 has a structure in which two types of rubber layers having different physical properties (a cap tread layer 11 and an undertread layer 12) are layered in the tire radial direction. The cap tread layer 11 is disposed on outer circumferential side of the undertread layer 12 and constitutes a road contact surface of the tread portion 1. The undertread layer 12 is sandwiched between the cap tread layer 11 and the reinforcing layer. A side rubber layer 20 is disposed on the outer circumferential side (the outer side in the tire width direction) of the carcass layer 4 in the sidewall portion 2, and a rim cushion rubber layer 30 is disposed on the outer circumferential side (the outer side in the tire width direction) of the carcass layer 4 in the bead portion 3.

An embodiment of the present invention mainly relates to the rubber composition constituting the tread portion 1 (especially, cap tread layer 11), and thus other portions and constituent members are not limited to the structure described above. In the following description, a rubber composition constituting the cap tread layer 11 may be referred to as a cap tread rubber, and a rubber composition constituting the undertread layer 12 may be referred to as an undertread rubber.

In the rubber composition constituting the cap tread layer 11, the rubber component contains indispensably two types of components that are natural rubber and styrene-butadiene rubber, and can optionally use butadiene rubber in combination, and the total of these is 100 mass%. In an embodiment of the present invention, combined use of these two types or three types of rubbers in the proportions described below allows off-road durability performance, snow performance, wet performance, and rolling resistance performance to be improved.

The natural rubber is not limited as long as the natural rubber is typically used for rubber compositions for tires. Off-road durability performance can be further enhanced by blending the natural rubber. The content of the natural rubber is 50 mass% or more, and preferably 50 mass% or more and 60 mass% or less, per 100 mass% of the rubber component. When the content of the natural rubber is less than 50 mass%, off-road durability performance cannot be sufficiently improved.

The styrene-butadiene rubber used in an embodiment of the present invention is terminal-modified styrene-butadiene rubber having a vinyl content of 35 mass% to 70 mass% and preferably of 55 mass% to 70 mass%. Use of such terminal-modified styrene-butadiene rubber allows wet performance and low rolling resistance to be improved. The styrene content in the styrene-butadiene rubber is not limited to a particular content and preferably ranges from 20 mass% to 40 mass% and more preferably from 20 mass% to 30 mass%. The type of modification group in the terminal-modified styrene-butadiene rubber is not particularly limited as long as the vinyl content (and the styrene content) satisfies the condition described above, and examples thereof include an epoxy group, a carboxy group, an amino group, a hydroxy group, an alkoxy group, a silyl group, an alkoxysilyl group, an amide group, an oxysilyl group, a silanol group, an isocyanate group, an isothiocyanate group, a carbonyl group, an aldehyde group, and a siloxane group. Among these modification groups, an amino group, an alkoxysilyl group, and a silanol group can be suitably used. Furthermore, the weight average molecular weight (Mw) of the terminal-modified styrene-butadiene rubber of an embodiment of the present invention preferably ranges from 2.5 × 10⁵ to 5.0 × 10⁵ and more preferably from 3.0 × 10⁵ to 4.0 × 10⁵. By using the terminal-modified styrene-butadiene rubber having a relatively low molecular weight as described above and having a large number of molecular chain terminals, the number of modification group can be increased, and silica can be more efficiently dispersed in the diene rubber. The "weight average molecular weight (Mw)" in an embodiment of the present invention refers to a weight average molecular weight determined by gel permeation chromatography (GPC) based on calibration with polystyrene.

The content of the styrene-butadiene rubber is 20 mass% or more and 40 mass% or less, and preferably 30 mass% or more and 40 mass% or less, per 100 mass% of the rubber component. The content of the styrene-butadiene rubber of less than 20 mass% degrades wet performance. The content of the styrene-butadiene rubber of more than 40 mass% degrades snow performance.

As described above, the rubber component of an embodiment of the present invention can optionally use butadiene rubber in combination; however, the type of butadiene rubber is not limited to a particular type. **In** a case where butadiene rubber is used in combination, the content thereof is preferably 5 mass% or more and 20 mass% or less and more preferably 5 mass% or more and 15 mass% or less per 100 mass% of the rubber component. The content of the butadiene rubber of less than 5 mass% degrades wear resistance. The content of the butadiene rubber of more than 20 mass% degrades wet performance.

Silica is indispensably blended in the rubber composition constituting the cap tread layer 11. Examples of the silica that can be used include wet silica (hydrous silicic acid), dry silica (silicic anhydride), calcium silicate, and aluminum silicate. These silicas may be used alone or used by combining two or more types of silicas. Surface-treated silica, in which the surface of silica is treated with a silane coupling agent, may also be used. By the blending of the silica, rubber hardness of the rubber composition can be increased, and excellent off-road durability performance can be achieved when a pneumatic tire is formed. The blended amount of silica ranges from 50 parts by mass to 100 parts by mass and preferably from 65 parts by mass to 85 parts by mass per 100 parts by mass of the rubber component described above. The blended amount of the silica of less than 50 parts by mass degrades wet performance. The blended amount of silica of more than 100 parts by mass degrades off-road durability performance.

The CTAB adsorption specific surface area of the silica is not limited to a particular area and preferably ranges from 130 m²/g to 185 m²/g and more preferably from 155 m²/g to 175 m²/g. Setting the CTAB adsorption specific surface area of the silica to 130 m²/g or more allows wet performance to be improved. Furthermore, by setting the CTAB adsorption specific surface area of the silica to 185 m²/g or less, low rolling resistance performance can be improved. In an embodiment of the present invention, the CTAB adsorption specific surface area of silica is a value measured in accordance with ISO 5794.

Carbon black is indispensably blended in the rubber composition constituting the cap tread layer 11 in addition to the silica. By the blending of the carbon black, rubber hardness of the rubber composition can be increased, and excellent off-road durability performance can be achieved when a pneumatic tire is formed. The blended amount of the carbon black ranges from 5 parts by mass to 25 parts by mass and preferably from 8 parts by mass to 15 parts by mass per 100 parts by mass of the rubber component described above. The blended amount of the carbon black of less than 5 parts by mass degrades off-road durability performance. The blended amount of the carbon black of more than 25 parts by mass degrades wet performance and low rolling resistance performance.

The nitrogen adsorption specific surface area (N₂SA) of the carbon black used in an embodiment of the present invention is less than 130 m²/g and preferably from 126 m²/g to 79 m²/g. By using such a carbon black, rolling resistance can be reduced. The nitrogen adsorption specific surface area of the carbon black of 130 m²/g or more cannot reduce rolling resistance. In an embodiment of the present invention, the nitrogen adsorption specific surface area of carbon black is a value measured in accordance with JIS K 6217-2.

The rubber composition constituting the cap tread layer 11 can contain another filler besides the silica and the carbon black described above. Examples of the other fillers include calcium carbonate, magnesium carbonate, talc, clay, alumina, aluminum hydroxide, titanium oxide, and calcium sulfate. These other fillers may be used alone or used by combining two or more types of fillers.

In the rubber composition constituting the cap tread layer 11, a silane coupling agent is preferably blended together with the silica described above. The silane coupling agent can improve the dispersibility of the silica. The blended amount of the silane coupling agent preferably ranges from 6 mass% to 12 mass% and more preferably from 8 mass% to 10 mass% of the silica. The blended amount of the silane coupling agent of less than 6 mass% may be unable to sufficiently improve dispersibility of the silica. The blended amount of the silane coupling agent of more than 12 mass% may cause premature vulcanization of the rubber composition and degrade the forming processability.

The silane coupling agent is not particularly limited as long as the silane coupling agent can be used for a rubber composition for a tire. Examples thereof include sulfur-containing silane coupling agents such as bis(3-triethoxysilylpropyl)tetrasulfide, bis(3-triethoxysilylpropyl)disulfide, 3-trimethoxysilylpropyl benzothiazole tetrasulfide, γ-mercaptopropyl triethoxysilane, and 3-octanoylthiopropyl triethoxysilane. Among these, the silane coupling agent having a mercapto group is preferred, and the affinity to silica can be enhanced, and the dispersibility can be improved. These silane coupling agents can be blended alone or blended by combining multiple types of agents.

In an embodiment of the present invention, the rubber composition constituting the cap tread layer 11 may contain various additives, such as a vulcanization or crosslinking agent, a vulcanization accelerator, various oils, an anti-aging agent, and a plasticizer, that are typically used for rubber compositions for tires besides the compounding agents described above in a range that does not impair the object of the present invention. These additives can be kneaded by a typical method to form a rubber composition to be used for vulcanization or crosslinking. The blended amounts of these additives may be known typical blended amounts without departing from the object of the present invention. The rubber composition for a tire can be produced by mixing each component described above by using a common rubber kneading machine such as a Banbury mixer, a kneader, and a roll.

When the strength at break is TB [unit: MPa] and the elongation at break is EB [unit: %] for the cap tread rubber made of the blend described above and when a tensile product calculated as a product of these is TB × EB, the tensile product TB × EB of the cap tread rubber of an embodiment of the present invention is 12000 or more, and preferably 12500 or more. Furthermore, the hardness of the cap tread rubber of an embodiment of the present invention is 60 or more and 70 or less, and preferably 64 or more and 68 or less. Setting the tensile product and the hardness in this manner advantageously provides off-road durability performance, snow performance, wet performance, and rolling resistance performance in a well-balanced and compatible manner. The tensile product TB × EB of the cap tread rubber of less than 12000 degrades off-road durability performance. The hardness of the cap tread rubber of less than 60 cannot improve off-road durability performance. The hardness of the cap tread rubber of more than 70 cannot improve snow performance.

Values of the strength at break TB and the elongation at break EB used for the calculation of the tensile product described above are not limited to particular values, and the strength at break TB preferably ranges from 23 MPa to 28 MPa and more preferably from 24 MPa to 27 MPa, and the elongation at break EB is preferably 450% or more and more preferably 550% or more. Setting the values in this manner makes the rubber physical properties better and advantageously provides off-road durability performance, snow performance, wet performance, and rolling resistance performance in a well-balanced and compatible manner.

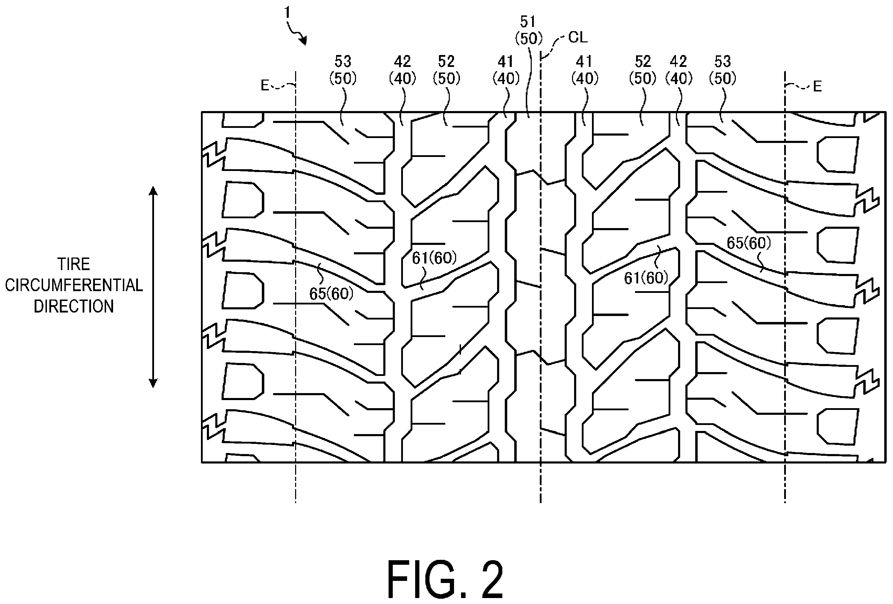

When the cap tread rubber described above is used for a tread portion 1 (cap tread layer 11) of a pneumatic tire, a tread pattern formed on an outer surface of the tread portion 1 is not limited to a particular pattern and is, for example, preferably an aspect illustrated in FIG. 2. The tread pattern of FIG. 2 is a pattern suitable for off-road traveling and has excellent off-road durability performance, snow performance, and wet performance, and thus can effectively enhance various tire performances described above, which are targets of an embodiment of the present invention, when combined with the cap tread rubber described above.

In the example of FIG. 2, four main grooves 40 are formed in a tread portion 1. Each two of the four main grooves 40 are disposed on both sides in the tire width direction of the tire equatorial plane CL and, in this way, the four main grooves are formed side by side in the tire width direction. In other words, the four main grooves 30 in total are formed in the tread portion 1, including: two center main grooves 41 disposed on both sides of the tire equatorial plane CL; and two shoulder main grooves 42 disposed on an outer side in the tire width direction of each of the two center main grooves 41.

A "main groove 40" refers to a vertical groove in which at least a part is extending in the tire circumferential direction. In general, the main groove 40 has a groove width of 3 mm or more and a groove depth of 6 mm or more and has a tread wear indicator (slip sign) therein, indicating terminal stages of wear. In the present embodiment, the main groove 40 has a groove width of 5 mm or more and 8 mm or less and a groove depth of 8 mm or more and 9 mm or less, and the extension direction is substantially parallel to a tire equator line (centerline) where the tire equatorial plane CL and the tread ground contact surface 3 intersect.

The "groove width" is the maximum value of the distance between facing groove walls measured at the groove opening portion when the tire is mounted on a specified rim, inflated to the specified internal pressure, and in an unloaded state. In a configuration in which the land portion includes a notch portion or a chamfered portion on an edge portion thereof, the groove width is measured with intersection points between the tread ground contact surface and extension lines of the groove walls as measurement points, in a cross-sectional view with the groove length direction as a normal line direction. In a configuration in which the grooves extend in a zigzag shape or a wave shape in the tire circumferential direction, the groove width is measured with reference to the center line of the oscillation of the groove walls as measurement points. The "groove depth" is the maximum value of a distance from the tread ground contact surface to the groove bottom and is measured when the tire is mounted on a specified rim, inflated to the specified internal pressure, and in an unloaded state. In a configuration in which the grooves include a partially uneven portion or sipe on the groove bottom, the groove depth is measured excluding these portions.

The plurality of the land portions 50 defined by the main grooves 40 include a center land portion 51, a second land portion 52, and a shoulder land portion 53. Among these, the center land portion 51 is disposed between the two center main grooves 41 and located on the tire equatorial plane CL, and both sides in the tire width direction are defined by the center main grooves 41. Moreover, the second land portion 52 is positioned between the center main groove 41 and the shoulder main groove 42 that are adjacent in the tire width direction and disposed on the outer side in the tire width direction of the center land portion 51, and both sides in the tire width direction of the second land portion 52 are defined by the center main groove 41 and the shoulder main groove 42. In addition, the shoulder land portion 53 is disposed on the outer side of the shoulder main groove 42 in the tire width direction, is disposed adjacent to the second land portion 52 by interposing the shoulder main groove 42 therein, and is defined by the shoulder main groove 42 on the inner side in the tire width direction.

On the outer surface (tread ground contact surface) of the tread portion 1, a plurality of lug grooves 60 extending in the tire width direction is formed, and the lug grooves 60 include a second lug groove 61 and a shoulder lug groove 65. In the present embodiment, the lug groove 60 has a groove width of 1.6 mm or more and 6 mm or less and a groove depth of 4 mm or more and 7 mm or less. Among the second lug groove 61 and the shoulder lug groove 65, the second lug groove 61 is disposed between the adjacent center main groove 41 and the shoulder main groove 42, extends in the tire width direction, and has ends opening to the center main groove 41 and the shoulder main groove 42. Furthermore, the shoulder lug groove 65 is disposed on the outer side of the shoulder main groove 42 in the tire width direction, extends in the tire width direction across the ground contact edge E, and has one end opening to the shoulder main groove 42.

Among the land portions 50 defined by the main grooves 40, the second land portion 52 having both sides in the tire width direction defined by the center main groove 41 and the shoulder main groove 42 have both sides in the tire circumferential direction defined by the second lug grooves 61 that are adjacent in the tire circumferential direction. The ends of the second lug groove 61 open to the center main groove 41 and the shoulder main groove 42, and thus the second land portion 52 having both sides in the tire circumferential direction defined by the second lug grooves 61 is formed as a block-shaped land portion 50. Similarly, the shoulder land portion 53 having the inner side in the tire width direction defined by the shoulder main groove 42 has both sides in the tire circumferential direction defined by the shoulder lug grooves 65 that are adjacent in the tire circumferential direction. The shoulder lug groove 65 extends in the tire width direction across the ground contact edge E, and thus at least a portion on the inner side in the tire width direction from the ground contact edge E of the shoulder land portion 53 having both sides in the tire circumferential direction defined by the shoulder lug grooves 65 is formed in a block shape. Meanwhile, the center land portion 51 having both sides in the tire width direction defined by the center main grooves 41 is formed as a rib-shaped land portion 50 formed continuously in the tire circumferential direction without being separated by the lug groove 60.

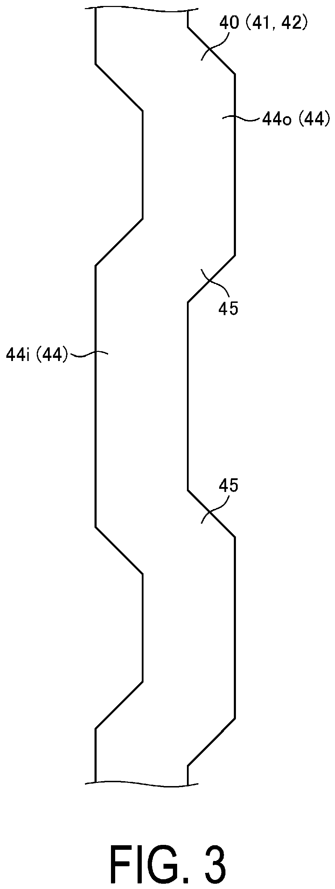

FIG. 3 is a detailed view of the main groove 40 illustrated in FIG. 2. In the tread portion 1, the four main grooves 40, which are the two center main grooves 41 and the two shoulder main grooves 42, are disposed, and each of the main grooves 40 is formed in a step shape having circumferential extending portions 44 extending in the tire circumferential direction at positions that are different in the tire width direction. The "step shape" herein refers to a shape in which a center line indicating the center in the groove width direction is oscillated in a rectangular wave or a trapezoidal wave. In other words, the main groove 40 includes two types of circumferential extending portions 44 located at positions that are different from each other in the tire width direction, and the two types of the circumferential extending portions 44 are alternately disposed in the tire circumferential direction, and the end portions of the circumferential extending portions 44 that are different but adjacent in the tire circumferential direction are connected by the connection portion 45. The connection portion 45 also constitutes the main groove 40.

The two types of the circumferential extending portions 44 include, for example, a plurality of the inner circumferential extending portions 44i and a plurality of the outer circumferential extending portions 44o located on the outer side in the tire width direction from the inner circumferential extending portions 44i, and the inner circumferential extending portions 44i and the outer circumferential extending portions 44o are alternately disposed in the tire circumferential direction. For these inner circumferential extending portions 44i and the outer circumferential extending portions 44o, the inner circumferential extending portions 44i are located at the same position in the tire width direction, and the outer circumferential extending portions 44o are located at the same position in the tire width direction.

Furthermore, the connection portion 45 connects close end portions of the inner circumferential extending portion 44i and the outer circumferential extending portion 44o that are adjacent in the tire circumferential direction, and in the present embodiment, the connection portion 45 extends inclined in the tire circumferential direction with respect to the tire width direction. Thus, in the present embodiment, the main groove 40 formed in the step shape is formed in a so-called a trapezoidal wave shape. As described above, in the main groove 40 including the inner circumferential extending portion 44i, the outer circumferential extending portion 44o, and the connection portion 45, the groove width of the inner circumferential extending portion 44i, the outer circumferential extending portion 44o, and the connection portion 45 are substantially constant in one main groove 40.

The lug groove 60 opens to the main groove 40 formed as described above; however, among the two types of the circumferential extending portions 44 included in the main groove 40, the lug groove 60 opens to the circumferential extending portion 44 on the side where the lug groove 60 opening to the main groove 40 is located in the tire width direction. For example, the second lug groove 61 opening to the center main groove 41 and the shoulder main groove 42 opens to the circumferential extending portion 44 located closer to the second lug groove 61 among the circumferential extending portions 44 included in each of the center main groove 41 and the shoulder main groove 42 formed in the step shape. That is, the second lug groove 61 opens to the center main groove 41 from the outer side in the tire width direction with respect to the center main groove 41, and thus the second lug groove 61 opens to the outer circumferential extending portion 44o included in the center main groove 41. Furthermore, the second lug groove 61 opens to the shoulder main groove 42 from the inner side in the tire width direction with respect to the shoulder main groove 42, and thus the second lug groove 61 opens to the inner circumferential extending portion 44i included in the shoulder main groove 42.

Furthermore, the shoulder lug groove 65 opening to the shoulder main groove 42 opens to the circumferential extending portion 44 located closer to the shoulder lug groove 65 among the circumferential extending portions 44 included in the shoulder main groove 42 formed in the step shape. That is, the shoulder main groove 42 opens to the shoulder main groove 42 from the outer side in the tire width direction with respect to the shoulder main groove 42, and thus the shoulder main groove 42 opens to the outer circumferential extending portion 44o included in the shoulder main groove 42. The second lug groove 61 and the shoulder lug groove 65 opening to the shoulder main groove 42 from the inner side and the outer side of the shoulder main groove 42 in the tire width direction open to different circumferential extending portions 44, and thus the second lug groove 61 and the shoulder lug groove 65 open at different positions of the shoulder main groove 42 in the tire circumferential direction.

As described above, the second lug groove 61 and the shoulder lug groove 65 opening to the main groove 40 each extend in the tire width direction and are formed inclined in the tire circumferential direction with respect to the tire width direction. At this time, inclination directions of the second lug groove 61 and the shoulder lug groove 65, toward the tire circumferential direction with respect to the tire width direction, are opposite to each other. For example, when the second lug groove 61 and the shoulder lug groove 65 extend towards the outer side of the tire width direction from the inner side of the tire width direction, the second lug groove 61 and the shoulder lug groove 65 both extend in the tire width direction and incline toward the tire circumferential direction; however, the directions toward the tire circumferential direction of the second lug groove 61 and the shoulder lug groove 65 are opposite to each other.

Furthermore, among the plurality of the second lug grooves 61 disposed side by side in the tire circumferential direction, two types of second lug grooves 61 having different inclination angles with respect to the tire width direction are alternately disposed. That is, the second lug grooves 61 include a first second lug groove 62 and a second second lug groove 63 having inclination angles that are different from each other with respect to the tire width direction and being alternately disposed in the tire circumferential direction. Thus, the second land portion 52 having both sides in the tire circumferential direction defined by the second lug grooves 61 that are adjacent in the tire circumferential direction has both side in the tire circumferential direction defined by the first second lug groove 62 and the second lug groove 63 that are adjacent in the tire circumferential direction.

An embodiment of the present invention will further be described below by way of Examples, but the scope of an embodiment of the present invention is not limited to Examples.

### Examples

Twenty types of pneumatic tires (test tires) each having a basic structure illustrated in FIG. 1 and having a tire size of 285/60R18 were produced (Standard Example 1, Comparative Examples 1 to 6, and Examples 1 to 13). In each of the examples, a cap tread rubber constituting a cap tread layer has blends and physical properties listed in Tables 1 to 3 (Table 3 is a common compound for all examples). For tread patterns, as listed in Tables 1 to 2, shape of main grooves, whether inclination directions of a second lug groove and a shoulder lug groove are the same or opposite (row of "inclination directions of lug grooves" in the tables), presence or absence of two types of second lug grooves having different inclination angles (row of "two types of second lug grooves" in the tables), and whether a lug groove opens to a circumferential extending portion located closer to the lug groove (row of "opening position of lug groove" in the tables) were made different.

In preparing the cap tread rubbers used in the examples (rubber compositions for tires), ingredients other than a vulcanization accelerator and sulfur were weighed and kneaded in a 1.8 L sealed Banbury mixer for 5 minutes. Then, a master batch was discharged and cooled at room temperature. Thereafter, the master batch was added into the 1.8 L sealed Banbury mixer, and the vulcanization accelerator and sulfur were added and mixed for 2 minutes. Thus, each of the rubber compositions for tires was obtained.

The physical properties listed in Tables 1 and 2 were measured by using a vulcanized rubber test piece made of each of the rubber compositions for tires. The test piece was produced by vulcanizing the cap tread rubber (rubber composition for a tire) used in each of the examples at 145°C for 35 minutes in a mold having a predetermined shape. Specifically, "Hardness" was a value measured at a temperature of 20°C by using a type A durometer in accordance with JIS K 6253. Furthermore, "Strength at break TB" and "Elongation at break EB" were stress at break (strength at break; unit: MPa) and elongation ratio at break (elongation at break; unit: %) determined in accordance with JIS K 6251 by punching out a JIS No. 3 dumbbell test piece (thickness: 2 mm) and measuring under the conditions of a temperature of 20°C and a tensile speed of 500 mm/minute. The tensile product is a product TB × EB of "Strength at break TB" and "Elongation at break EB" and was calculated based on the values in each of the examples.

For rows of "Shape of main groove" in Tables 1 and 2, a case where the shape of the main groove was a step shape having circumferential extending portions extending in the tire circumferential direction at positions that were different in the tire width direction was indicated as "Step", and a case where the shape of the main groove was a zigzag shape that oscillated in the tire width direction and extended in the tire circumferential direction was indicated as "Zigzag". For rows of "Inclination directions of lug grooves" in Tables 1 and 2, a case where the inclination directions of the second lug groove and the shoulder lug groove were the same was indicated as "Same", and a case where the inclination directions were opposite was indicated as "Opposite". For rows of "Two types of second lug grooves" in Tables 1 and 2, a case where two types of second lug grooves having different inclination angles were included was indicated as "Yes", and a case where inclination angles of all the second lug grooves were the same was indicated as "No". For rows of "Opening position of lug groove" in Tables 1 and 2, a case where the lug groove opened to a circumferential extending portion closer to the lug groove was indicated as "Open", and a case where the lug groove opened to a circumferential extending portion far from the lug groove was indicated as "Not open".

For each of the test tires, snow performance, wet performance, low rolling performance, and off-road durability performance were evaluated by the following methods.

### Snow performance

Each of the test tires was assembled on a rim wheel having a rim size of 18 × 8J, inflated to an air pressure of 230 kPa, and mounted on a test vehicle, which was a four-wheel drive SUV vehicle. Braking was performed from a traveling condition at a speed of 40 km/h on an icy and snowy road surface, and a braking distance until the test vehicle came to a complete stop was measured. The evaluation results are expressed as index values with Standard Example 1 being assigned 100 by using the reciprocal of the measurement values. Larger index values indicate shorter braking distance and excellent braking performance on icy and snowy road surfaces (snow performance). An index value of "98" or more means that adequate snow performance is obtained.

### Wet performance

Each of the test tires was assembled on a rim wheel having a rim size of 18 × 8J, inflated to an air pressure of 230 kPa, and mounted on a test vehicle, which was a four-wheel drive SUV vehicle. Braking was performed from a traveling condition at a speed of 100 km/h on a wet road surface, and a braking distance until the test vehicle came to a complete stop was measured. The evaluation results are expressed as index values with Standard Example 1 being assigned 100 by using the reciprocal of the measurement values. Larger index values indicate shorter braking distance and excellent braking performance on wet road surfaces (wet performance).

### Low rolling performance

Each of the test tires was assembled on a rim wheel having a rim size of 18 × 8J. Rolling resistance was measured in accordance with ISO 28580 using a drum testing machine having a drum diameter of 1707.6 mm under the conditions of an air pressure of 240 kPa, a load of 4.82 kN, and a speed of 80 km/h. The evaluation results are expressed as index values with Standard Example 1 being assigned 100 by using the reciprocal of the measurement values. Larger index values indicate lower rolling resistance and excellent low rolling performance.

### Off-road durability performance

Each of the test tires was assembled on a rim wheel having a rim size of 18 × 8J, inflated to an air pressure of 230 kPa, and mounted on a test vehicle, which was a four-wheel drive SUV vehicle. Travel test was performed on each of a rocky ground surface, a muddy road, and a sandy ground, and a tread portion after the test was observed. The number of occurrences of obvious chunking having a range and depth of 5 mm or more on the tire circumference was measured. Based on the measured number of occurrences on the tire circumference, the average number per 1 pitch of a tread pattern was calculated. For the evaluation result, a case where the average number of chunking was 3 or more was indicated as "Poor", a case where the average number of chunking was 1 or more and less than 3 was indicated as "Fair", and a case where the average number of chunking was less than 1 was indicated as "Good". An evaluation result of "Fair" or "Good" indicates that adequate off-road durability was achieved. In particular, an evaluation result of "Good" indicates that excellent off-road durability was achieved.

**Table 1-1**

| | | | Standard Example 1 | Example 1 | Example 2 | Example 3 | Comparative Example 1 |
|---|---|---|---|---|---|---|---|
| Blend | NR | Parts by mass | 40 | 55 | 55 | 55 | 55 |
| | SBR 1 | Parts by mass | 40 | 30 | 30 | 30 | 30 |
| | SBR 2 | Parts by mass | | | | | |
| | SBR 3 | Parts by mass | | | | | |
| | SBR 4 | Parts by mass | | | | | |
| | SBR 5 | Parts by mass | | | | | |
| | BR | Parts by mass | 20 | 15 | 15 | 15 | 15 |
| | Silica | Parts by mass | 60 | 70 | 90 | 55 | 110 |
| | CB1 | Parts by mass | 25 | 15 | 15 | 15 | 15 |
| | CB2 | Parts by mass | | | | | |
| | Silane coupling agent | Parts by mass | 5 | 6 | 7 | 7 | 8 |
| | Aroma oil | Parts by mass | 10 | 10 | 20 | 10 | 30 |
| Physical properties | Hardness | | 67 | 67 | 67 | 61 | 67 |
| | Strength at break TB | MPa | 23.0 | 25.5 | 24.5 | 26.0 | 24.0 |
| | Elongation at break EB | % | 500 | 580 | 530 | 600 | 480 |
| | Tensile product TB × EB | | 11500 | 14790 | 12985 | 15600 | 11520 |
| Pattern | Shape of main groove | | Step | Step | Step | Step | Step |
| | Inclination directions of lug grooves | | Opposite | Opposite | Opposite | Opposite | Opposite |
| | Two types of second lug grooves | | Yes | Yes | Yes | Yes | Yes |
| | Opening position of lug groove | | Open | Open | Open | Open | Open |
| Evaluation results | Snow performance | Index value | 100 | 105 | 102 | 115 | 98 |
| | Wet performance | Index value | 100 | 106 | 110 | 102 | 106 |
| | Low rolling performance | Index value | 100 | 106 | 103 | 112 | 98 |
| | Off-road durability performance | | Poor | Good | Good | Good | Poor |

**Table 1-2**

| | | | Comparative Example 2 | Comparative Example 3 | Comparative Example 4 | Comparative Example 5 |
|---|---|---|---|---|---|---|
| Blend | NR | Parts by mass | 55 | 55 | 55 | 55 |
| | SBR 1 | Parts by mass | 30 | 30 | 30 | 30 |
| | SBR 2 | Parts by mass | | | | |
| | SBR 3 | Parts by mass | | | | |
| | SBR 4 | Parts by mass | | | | |
| | SBR 5 | Parts by mass | | | | |
| | BR | Parts by mass | 15 | 15 | 15 | 15 |
| | Silica | Parts by mass | 45 | 70 | 70 | 70 |
| | CB1 | Parts by mass | 40 | 15 | 15 | |
| | CB2 | Parts by mass | | | | 15 |
| | Silane coupling agent | Parts by mass | 4 | 6 | 6 | 6 |
| | Aroma oil | Parts by mass | 15 | 5 | 30 | 15 |
| Physical properties | Hardness | | 67 | 72 | 59 | 67 |
| | Strength at break TB | MPa | 25.0 | 24.5 | 23.0 | 25.0 |
| | Elongation at break EB | % | 500 | 500 | 620 | 520 |
| | Tensile product TB × EB | | 12500 | 12250 | 14260 | 13000 |
| Pattern | Shape of main groove | | Step | Step | Step | Step |
| | Inclination directions of lug grooves | | Opposite | Opposite | Opposite | Opposite |
| | Two types of second lug grooves | | Yes | Yes | Yes | Yes |
| | Opening position of lug groove | | Open | Open | Open | Open |
| Evaluation results | Snow performance | Index value | 100 | 95 | 107 | 103 |
| | Wet performance | Index value | 97 | 100 | 104 | 102 |
| | Low rolling performance | Index value | 96 | 107 | 102 | 98 |
| | Off-road durability performance | | Good | Good | Poor | Good |

**Table 1-3**

| | | | Example 4 | Example 5 | Example 6 | Example 7 |
|---|---|---|---|---|---|---|
| Blend | NR | Parts by mass | 55 | 55 | 55 | 55 |
| | SBR 1 | Parts by mass | 30 | 30 | 30 | 30 |
| | SBR 2 | Parts by mass | | | | |
| | SBR 3 | Parts by mass | | | | |
| | SBR 4 | Parts by mass | | | | |
| | SBR 5 | Parts by mass | | | | |
| | BR | Parts by mass | 15 | 15 | 15 | 15 |
| | Silica | Parts by mass | 70 | 70 | 70 | 70 |
| | CB1 | Parts by mass | 15 | 15 | 15 | 15 |
| | CB2 | Parts by mass | | | | |
| | Silane coupling agent | Parts by mass | 6 | 6 | 6 | 6 |
| | Aroma oil | Parts by mass | 10 | 10 | 10 | 10 |
| Physical properties | Hardness | | 67 | 67 | 67 | 67 |
| | Strength at break TB | MPa | 25.5 | 25.5 | 25.5 | 25.5 |
| | Elongation at break EB | % | 580 | 580 | 580 | 580 |
| | Tensile product TB × EB | | 14790 | 14790 | 14790 | 14790 |
| Pattern | Shape of main groove | | Zigzag | Step | Step | Step |
| | Inclination directions of lug grooves | | Opposite | Same | Opposite | Opposite |
| | Two types of second lug grooves | | Yes | Yes | No | Yes |
| | Opening position of lug groove | | Open | Open | Open | Not open |
| Evaluation results | Snow performance | Index value | 105 | 105 | 105 | 105 |
| | Wet performance | Index value | 102 | 103 | 104 | 103 |
| | Low rolling performance | Index value | 106 | 106 | 106 | 106 |
| | Off-road durability performance | | Good | Fair | Fair | Fair |

**Table 2**

| | | | Example 8 | Example 9 | Comparative Example 6 | Example 10 | Example 11 | Example 12 | Example 13 |
|---|---|---|---|---|---|---|---|---|---|
| | NR | Parts by mass | 55 | 55 | 55 | 55 | 55 | 55 | 55 |
| | SBR 1 | Parts by mass | | | | | 20 | 40 | 45 |
| | SBR 2 | Parts by mass | 30 | | | | | | |
| | SBR 3 | Parts by mass | | 30 | | | | | |
| | SBR 4 | Parts by mass | | | 30 | | | | |
| Blend | SBR 5 | Parts by mass | | | | 30 | | | |
| | BR | Parts by mass | 15 | 15 | 15 | 15 | 25 | 5 | |
| | Silica | Parts by mass | 70 | 70 | 70 | 70 | 70 | 70 | 70 |
| | CB1 | Parts by mass | 15 | 15 | 15 | 15 | 15 | 15 | 15 |
| | CB2 | Parts by mass | | | | | | | |
| | Silane coupling agent | Parts by mass | 6 | 6 | 6 | 6 | 5 | 5 | 5 |
| | Aroma oil | Parts by mass | 10 | 10 | 10 | 10 | 10 | 10 | 10 |
| Physical properties | Hardness | | 67 | 67 | 67 | 67 | 67 | 67 | 67 |
| | Strength at break TB | MPa | 25.0 | 24.5 | 24.0 | 23.5 | 24.5 | 24.0 | 23.5 |
| | Elongation at break EB | % | 550 | 530 | 520 | 550 | 530 | 520 | 550 |
| | Tensile product TB × EB | | 13750 | 12985 | 12480 | 12925 | 12985 | 12480 | 12925 |
| Pattern | Shape of main groove | | Step | Step | Step | Step | Step | Step | Step |
| | Inclination directions of lug grooves | | Opposite | Opposite | Opposite | Opposite | Opposite | Opposite | Opposite |
| | Two types of second lug grooves | | Yes | Yes | Yes | Yes | Yes | Yes | Yes |
| | Opening position of lug groove | | Open | Open | Open | Open | Open | Open | Open |
| Evaluation results | Snow performance | Index value | 105 | 108 | 110 | 106 | 108 | 102 | 98 |
| | Wet performance | Index value | 106 | 100 | 95 | 102 | 102 | 110 | 112 |
| | Low rolling performance | Index value | 105 | 105 | 105 | 102 | 106 | 105 | 103 |
| | Off-road durability performance | | Good | Good | Good | Good | Good | Good | Good |

**Table 3**

| | | Blended amount |
|---|---|---|
| Stearic acid | Parts by mass | 2 |
| Zinc oxide | Parts by mass | 3 |
| Anti-aging agent | Parts by mass | 4 |
| Sulfur | Parts by mass | 1 |
| Vulcanization accelerator 1 | Parts by mass | 2 |
| Vulcanization accelerator 2 | Parts by mass | 1 |

Types of raw materials used as indicated in Tables 1 to 3 are described below.
- NR: Natural rubber, SIR20, available from PT. Kirana Sapta
- SBR 1: Terminal-modified styrene-butadiene rubber, HPR850, available from JSR Corporation (modification group: amine group, alkoxysilyl group; vinyl content: 59 mass%; styrene content: 27 mass%)
- SBR 2: Terminal-modified styrene-butadiene rubber, Nipol NS616, available from ZS Elastomers Co., Ltd. (modification group: polyorganosiloxane group; vinyl content: 67 mass%; styrene content: 21 mass%)
- SBR 3: Terminal-modified styrene-butadiene rubber, HPR840, available from JSR Corporation (modification group: amine group, alkoxysilyl group; vinyl content: 40 mass%; styrene content: 10 mass%)
- SBR 4: Terminal-modified styrene-butadiene rubber, Nipol NS612, available from ZS Elastomers Co., Ltd. (modification group: polyorganosiloxane group; vinyl content: 30 mass%; styrene content: 15 mass%)
- SBR 5: Unmodified styrene-butadiene rubber, NS460, available from ZS Elastomers Co., Ltd. (vinyl content: 63 mass%; styrene content: 25 mass%)
- BR: Butadiene rubber, Nipol 1220, available from Zeon Corporation
- Silica: Ultrasil 7000 GR, available from Evonik Industries AG
- CB1: Carbon black, SEAST 7HM N234, available from Tokai Carbon Co., Ltd. (nitrogen adsorption specific surface area N₂SA: 126 m²/g)
- CB2: Carbon black, SEAST 9M N110, available from Tokai Carbon Co., Ltd. (nitrogen adsorption specific surface area N₂SA: 142 m²/g)
- Silane coupling agent: Si69 available from Evonik Degussa
- Aroma oil: Extract No. 4S, available from Showa Shell Sekiyu K.K.
- Stearic acid: beads stearic acid, available from NOF Corporation
- Zinc oxide: Zinc Oxide III, available from Seido Chemical Industry Co., Ltd.
- Anti-aging agent: 6PPD, available from Korea Kumho Petrochemical
- Sulfur: Golden Flower oil treated sulfur powder, available from Tsurumi Chemical Industry Co., Ltd.
- Vulcanization accelerator 1: NOCCELER CZ-G, available from Ouchi Shinko Chemical Industrial Co., Ltd.
- Vulcanization accelerator 2: Soxinol D-G available from Sumitomo Chemical Co., Ltd.

As is clear from Table 1, each of pneumatic tires of Examples 1 to 13 improved wet performance, low rolling resistance performance, and off-road durability performance with respect to those of Standard Example 1 and provided these performances in a well-balanced, highly compatible manner. On the other hand, Comparative Example 1 had the large blended amount of the silica, the snow performance, degrading low rolling resistance performance, and off-road durability performance. Comparative Example 2 had the small blended amount of the silica, degrading the wet performance and low rolling resistance performance. Comparative Example 3 had the high hardness, degrading the snow performance. Comparative Example 4 had the low hardness, degrading the off-road durability performance. Comparative Example 5 had the large nitrogen adsorption specific surface area of the carbon black, degrading the low rolling resistance performance. Comparative Example 6 had the small vinyl amount of the styrene-butadiene rubber, degrading the snow performance.

### Reference Signs List

1 Tread portion
2 Sidewall portion
3 Bead portion
4 Carcass layer
5 Bead core
6 Bead filler
7 Belt layer
8 Belt cover layer
10 Tread rubber layer
11 Cap tread layer
12 Undertread layer
20 Side rubber layer
30 Rim cushion rubber layer
40 Main groove
41 Center main groove
42 Shoulder main groove
44 Circumferential extending portion
44i Inner circumferential extending portion
44o Outer circumferential extending portion
45 Connection portion
50 Land portion
51 Center land portion
52 Second land portion
53 Shoulder land portion
60 Lug groove
61 Second lug groove
62 First second lug groove
63 Second second lug groove
65 Shoulder lug groove
CL Tire equator
E Ground contact edge

## Claims

1. A pneumatic tire, comprising:
a tread portion (1) extending in a tire circumferential direction and having an annular shape;
a pair of sidewall portions (2) respectively disposed on both sides of the tread portion (1);
a pair of bead portions (3) each disposed on an inner side of the pair of sidewall portions (2) in a tire radial direction;
a carcass layer (4) mounted between the pair of bead portions (3); and
a plurality of reinforcing layers disposed on an outer circumferential side of the carcass layer (4) in the tread portion (1),
the tread portion (1) being made of two layers, an undertread layer (12) disposed on an outer circumferential side of the reinforcing layer and a cap tread layer (11) disposed on an outer circumferential side of the undertread layer (12) and constituting a road contact surface of the tread portion (1);
the cap tread layer (11) being made of a rubber composition in which 50 parts by mass to 100 parts by mass of silica and 5 parts by mass to 25 parts by mass of carbon black are blended per 100 parts by mass of diene rubber containing 50 mass% or more of natural rubber and 20 mass% or more and 40 mass% or less of styrene-butadiene rubber,
the styrene-butadiene rubber being terminal-modified styrene-butadiene rubber having a vinyl content of 35 mass% to 70 mass%,
the carbon black having a nitrogen adsorption specific surface area N₂SA of less than 130 m²/g, and
the rubber composition constituting the cap tread layer (11) having a tensile product TB × EB calculated as a product of strength at break TB [unit: MPa] and elongation at break EB [unit: %] of 12000 or more and having a hardness of 60 or more and 70 or less,
wherein TB and EB are determined in accordance with JIS K6251 by punching out a JIS No. 3 dumbbell test piece (thickness: 2 mm) and measuring under the conditions of a temperature of 20°C and a tensile speed of 500 mm/minute, wherein the hardness of the rubber composition is a value measured at a temperature of 23°C by using a type A durometer in accordance with JIS K 6253, wherein the nitrogen adsorption specific surface area of carbon black is a value measured in accordance with JIS K 6217-2.

2. The pneumatic tire according to claim 1, wherein the styrene-butadiene rubber has the vinyl content ranging from 55 mass% to 70 mass% and a styrene content ranging from 20 mass% to 30 mass%.

3. The pneumatic tire according to claim 1 or 2, wherein the diene rubber contains 5 mass% or more and 20 mass% or less of butadiene rubber besides the natural rubber and the styrene-butadiene rubber.

4. The pneumatic tire according to any one of claims 1 to 3, wherein
on an outer surface of the tread portion (1), four main grooves (40) extending along the tire circumferential direction and a plurality of land portions (50) defined by the main grooves (40) are formed,
the four main grooves (40) comprise two center main grooves (41) disposed on both sides of a tire equator (CL) and two shoulder main grooves (42) disposed on an outer side in a tire width direction of each of the two center main grooves (41),
each of the main grooves (40) has a circumferential extending portion (44) extending in the tire circumferential direction and is formed in a step shape at different positions in two tire width directions,
between the center main groove (41) and the shoulder main groove (42) that are adjacent, a second 1ug groove (61) extending in the tire width direction and having both ends opening to the center main groove (41) and the shoulder main groove (42) is disposed,
in an outer side in the tire width direction of the shoulder main groove (42), a shoulder 1ug groove (65) extending in the tire width direction across the ground contact edge (E) and having one end opening to the shoulder main groove (42) is disposed,
the second 1ug groove (61) and the shoulder 1ug groove (65) have inclination directions in the tire circumferential direction with respect to the tire width direction opposite to each other,
of a plurality of the second 1ug grooves (61) disposed side by side in the tire circumferential direction, two types of the second 1ug grooves (61) having different inclination angles with respect to the tire width direction are alternately disposed,
the second 1ug grooves (61) opening to the center main groove (41) and the shoulder main groove (42) open to the circumferential extending portion (44i) located closer to the second 1ug groove (61) of the circumferential extending portions (44) each included in the center main groove (41) and the shoulder main groove (42) formed in the step shape, and
the shoulder 1ug groove (65) opening to the shoulder main groove (42) opens to the circumferential extending portion (44o) located closer to the shoulder 1ug groove (65) of the circumferential extending portions included in the shoulder main groove (42) formed in the step shape.

## Patentansprüche

1. Luftreifen, umfassend:
einen Laufflächenabschnitt (1), der sich in Reifenumfangsrichtung erstreckt und eine Ringform aufweist;
ein Paar von Seitenwandabschnitten (2), die jeweils auf beiden Seiten des Laufflächenabschnitts (1) angeordnet sind;
ein Paar von Wulstabschnitten (3), die jeweils auf einer Innenseite des Paars von Seitenwandabschnitten (2) in Reifenradialrichtung angeordnet sind;
eine Karkassenschicht (4), die zwischen dem Paar von Wulstabschnitten (3) angebracht ist; und
eine Mehrzahl von Verstärkungsschichten, die auf einer Außenumfangsseite der Karkassenschicht (4) in dem Laufflächenabschnitt (1) angeordnet sind,
wobei der Laufflächenabschnitt (1) aus zwei Schichten hergestellt ist, einer Basislaufflächenschicht (12), die auf einer Außenumfangsseite der Verstärkungsschicht angeordnet ist, und einer Protektorlaufflächenschicht (11), die auf einer Außenumfangsseite der Basislaufflächenschicht (12) angeordnet ist und eine Straßenkontaktoberfläche des Laufflächenabschnitts (1) bildet;
die Protektorlaufflächenschicht (11) aus einer Kautschukzusammensetzung hergestellt ist, in der 50 Massenteile bis 100 Massenteile Silica und 5 Massenteile bis 25 Massenteile Ruß pro 100 Massenteile Dienkautschuk, der 50 Masse-% oder mehr Naturkautschuk und 20 Masse-% oder mehr und 40 Masse-% oder weniger Styrol-Butadien-Kautschuk enthält, gemischt sind,
der Styrol-Butadien-Kautschuk ein endständig modifizierter Styrol-Butadien-Kautschuk, der einen Vinylgehalt von 35 Masse-% bis 70 Masse-% aufweist, ist,
der Ruß eine spezifische Stickstoffadsorptionsoberfläche N₂SA von weniger als 130 m²/g aufweist, und
die Kautschukzusammensetzung, die die Protektorlaufflächenschicht (11) bildet, ein Zugprodukt TB x EB, das als ein Produkt aus Reißfestigkeit TB [Einheit: MPa] und Reißdehnung EB [Einheit: %] berechnet wird, von 12000 oder mehr aufweist und eine Härte von 60 oder mehr und 70 oder weniger aufweist,
wobei TB und EB gemäß JIS K6251 durch Ausstanzen eines Hantelprüfkörpers JIS Nr. 3 (Dicke: 2 mm) und Messen unter den Bedingungen einer Temperatur von 20 °C und einer Zuggeschwindigkeit von 500 mm/Minute bestimmt werden, wobei die Härte der Kautschukzusammensetzung einen Wert, der bei einer Temperatur von 23 °C durch Verwenden eines Durometers eines Typs A gemäß JIS K 6253 gemessen wird, beträgt, wobei die spezifische Stickstoffadsorptionsoberfläche von Ruß einen Wert, der gemäß JIS K 6217-2 gemessen wird, beträgt.

2. Luftreifen gemäß Anspruch 1, wobei der Styrol-Butadien-Kautschuk den Vinylgehalt, der von 55 Masse-% bis 70 Masse-% reicht, und einen Styrolgehalt, der von 20 Masse-% bis 30 Masse-% reicht, aufweist.

3. Luftreifen gemäß Anspruch 1 oder 2, wobei der Dienkautschuk 5 Masse-% oder mehr und 20 Masse-% oder weniger Butadienkautschuk neben dem Naturkautschuk und dem Styrol-Butadien-Kautschuk enthält.

4. Luftreifen gemäß einem der Ansprüche 1 bis 3, wobei
auf einer Außenoberfläche des Laufflächenabschnitts (1), vier Hauptrillen (40), die sich entlang der Reifenumfangsrichtung erstrecken, und eine Mehrzahl von Stegabschnitten (50), die durch die Hauptrillen (40) bestimmt sind, ausgebildet sind,
die vier Hauptrillen (40) zwei zentrale Hauptrillen (41), die auf beiden Seiten eines Reifenäquators (CL) angeordnet sind, und zwei Schulterhauptrillen (42), die auf einer Außenseite in Reifenbreitenrichtung von jeder der zwei zentralen Hauptrillen (41) angeordnet sind, umfassen,
jede der Hauptrillen (40) einen sich umlaufend erstreckenden Abschnitt (44), der sich in Reifenumfangsrichtung erstreckt, aufweist und in einer Stufenform an unterschiedlichen Positionen in zwei Reifenbreitenrichtungen ausgebildet ist,
zwischen der zentralen Hauptrille (41) und der Schulterhauptrille (42), die angrenzend sind, eine zweite Stollenrille (61) angeordnet ist, die sich in Reifenbreitenrichtung erstreckt und beide Enden, die sich zu der zentralen Hauptrille (41) und der Schulterhauptrille (42) hin öffnen, aufweist,
in einer Außenseite in Reifenbreitenrichtung der Schulterhauptrille (42) eine Schulterstollenrille (65) angeordnet ist, die sich in Reifenbreitenrichtung über den Bodenkontaktrand (E) hinweg erstreckt und ein Ende, das sich zu der Schulterhauptrille (42) hin öffnet, aufweist,
die zweite Stollenrille (61) und die Schulterstollenrille (65) Neigungsrichtungen in Reifenumfangsrichtung in Bezug auf die Reifenbreitenrichtung, die einander entgegengesetzt sind, aufweisen,
von einer Mehrzahl der zweiten Stollenrillen (61), die in Reifenumfangsrichtung nebeneinander angeordnet sind, zwei Typen der zweiten Stollenrillen (61), die unterschiedliche Neigungswinkel in Bezug auf die Reifenbreitenrichtung aufweisen, abwechselnd angeordnet sind,
sich die zweiten Stollenrillen (61), die sich zu der zentralen Hauptrille (41) hin öffnen, und die Schulterhauptrille (42) zu dem sich umlaufend erstreckenden Abschnitt (44i) hin öffnen, der näher an der zweiten Stollenrillen (61) der sich umlaufend erstreckenden Abschnitte (44) gelegen ist, die jeweils in der zentralen Hauptrille (41) und der Schulterhauptrille (42), die in der Stufenform ausgebildet sind, eingeschlossen sind, und
sich die Schulterstollenrille (65), die sich zu der Schulterhauptrille (42) hin öffnet, zu dem sich umlaufend erstreckenden Abschnitt (44o) hin öffnet, der näher an der Schulterstollenrille (65) der sich umlaufend erstreckenden Abschnitte gelegen ist, die in der Schulterhauptrille (42), die in der Stufenform ausgebildet ist, eingeschlossen sind.

## Revendications

1. Pneumatique, comprenant :
une partie de bande de roulement (1) s'étendant dans une direction circonférentielle de pneu et ayant une forme annulaire ;
une paire de parties de flanc (2) disposées respectivement de part et d'autre de la partie de bande de roulement (1) ;
une paire de parties de talon (3) disposées chacune sur un côté interne de la paire de parties de flanc (2) dans une direction radiale de pneu ;
une couche de carcasse (4) montée entre la paire de parties de talon (3) ; et
une pluralité de couches de renfort disposées sur un côté circonférentiel externe de la couche de carcasse (4) dans la partie de bande de roulement (1),
la partie de bande de roulement (1) étant constituée de deux couches, une couche de sous-bande de roulement (12) disposée sur un côté circonférentiel externe de la couche de renfort et une couche de bande de roulement de couverture (11) disposée sur un côté circonférentiel externe de la couche de sous-bande de roulement (12) et constituant une surface de contact avec la route de la partie de bande de roulement (1) ;
la couche de bande de roulement de couverture (11) étant constituée d'une composition de caoutchouc dans laquelle de 50 parties en masse à 100 parties en masse de silice et de 5 parties en masse à 25 parties en masse de noir de carbone sont mélangées pour 100 parties en masse de caoutchouc diénique contenant 50 % en masse ou plus de caoutchouc naturel et 20 % en masse ou plus et 40 % en masse ou moins de caoutchouc de styrène-butadiène,
le caoutchouc de styrène-butadiène étant un caoutchouc de styrène-butadiène modifié au niveau des terminaisons ayant une teneur en vinyle de 35 % en masse à 70 % en masse,
le noir de carbone ayant une surface spécifique d'adsorption d'azote N₂SA inférieure à 130 m²/g, et
la composition de caoutchouc constituant la couche de bande de roulement de couverture (11) ayant un produit de traction TB x EB calculé en tant que produit de la résistance à la rupture TB [unité : MPa] et de l'allongement à la rupture EB [unité : %] de 12 000 ou plus et ayant une dureté de 60 ou plus et de 70 ou moins,
dans lequel TB et EB sont déterminés conformément à la norme JIS K 6251 par découpage à l'emporte-pièce d'une éprouvette JIS n° 3 en forme d'haltère (épaisseur : 2 mm) et mesure dans les conditions d'une température de 20 °C et d'une vitesse de traction de 500 mm/minute, dans lequel la dureté de la composition de caoutchouc est une valeur mesurée à une température de 23 °C à l'aide d'un duromètre de type A selon la norme JIS K 6253, dans lequel la surface spécifique d'adsorption d'azote du noir de carbone est une valeur mesurée conformément à la norme JIS K 6217-2.

2. Pneumatique selon la revendication 1, dans lequel le caoutchouc de styrène-butadiène a une teneur en vinyle allant de 55 % en masse à 70 % en masse et une teneur en styrène allant de 20 % en masse à 30 % en masse.

3. Pneumatique selon la revendication 1 ou 2, dans lequel le caoutchouc diénique contient 5 % en masse ou plus et 20 % en masse ou moins de caoutchouc de butadiène en plus du caoutchouc naturel et du caoutchouc de styrène-butadiène.

4. Pneumatique selon l'une quelconque des revendications 1 à 3, dans lequel
sur une surface externe de la partie de bande de roulement (1), quatre rainures principales (40) s'étendant le long de la direction circonférentielle de pneu et une pluralité de parties de méplat (50) définies par les rainures principales (40) sont formées,
les quatre rainures principales (40) comprennent deux rainures principales centrales (41) disposées de part et d'autre d'une ligne équatoriale de pneu (CL) et deux rainures principales d'épaulement (42) disposées sur un côté externe dans une direction de largeur de pneu de chacune des deux rainures principales centrales (41),
chacune des rainures principales (40) possède une partie d'extension circonférentielle (44) s'étendant dans la direction circonférentielle du pneu et est formée en forme de gradin à différentes positions dans deux directions de largeur du pneu,
entre la rainure principale centrale (41) et la rainure principale d'épaulement (42) qui sont adjacentes, est disposée une seconde rainure de barrette (61) s'étendant dans la direction de la largeur du pneu et dont les deux extrémités s'ouvrent dans la rainure principale centrale (41) et la rainure principale d'épaulement (42),
dans un côté extérieur dans la direction de la largeur du pneu de la rainure principale d'épaulement (42), est disposée une rainure de barrette d'épaulement (65) s'étendant dans la direction de la largeur du pneu à travers le bord de contact avec le sol (E) et dont une extrémité s'ouvre dans la rainure principale d'épaulement (42),
la seconde rainure de barrette (61) et la rainure de barrette d'épaulement (65) ont des directions d'inclinaison dans la direction circonférentielle du pneu par rapport à la direction de largeur du pneu opposées l'une à l'autre,
parmi une pluralité de secondes rainures de barrette (61) disposées côte à côte dans la direction circonférentielle du pneu, sont disposés en alternance deux types parmi les secondes rainures de barrette (61) ayant des angles d'inclinaison différents par rapport à la direction de la largeur du pneu,
les secondes rainures de barrette (61) s'ouvrant dans la rainure principale centrale (41) et la rainure principale d'épaulement (42) s'ouvrent dans la partie d'extension circonférentielle (44i) située plus près de la seconde rainure de barrette (61) des parties d'extension circonférentielles (44) incluses chacune dans la rainure principale centrale (41) et la rainure principale d'épaulement (42) formées suivant la forme de gradin, et
la rainure de barrette d'épaulement (65) s'ouvrant dans la rainure principale d'épaulement (42) s'ouvre dans la partie d'extension circonférentielle (44o) située plus près de la rainure de barrette d'épaulement (65) des parties d'extension circonférentielles incluses dans la rainure principale d'épaulement (42) formées suivant la forme en gradin.
